# EUROPÄISCHE PATENTANMELDUNG

(11) **EP 1 777 400 A2**
(43) Veröffentlichungstag der Anmeldung: **25.04.2007**
(21) Anmeldenummer: 06120658.7
(22) Anmeldetag: 14.09.2006
(51) Int. Cl.: F02D 41/22, F02D 41/20

(54) **Verfahren zum Überprüfen eines Ventils**

(30) Priorität: 20.10.2005 DE 102005050338
(71) Anmelder: SIEMENS AKTIENGESELLSCHAFT, 80333 München (DE)
(72) Erfinder: Bolz, Stephan, 93102 Pfatter (DE)

(57) **Zusammenfassung**

Ein Ventil weist einen Ventilkolben auf. Das Ventil umfasst mindestens eine Spule und mindestens ein magnetisiertes Bauelement. Das Ventil ist so ausgebildet, dass eine Induktionsspannung in der mindestens einen Spule induziert wird durch ein Bewegen des Ventilkolbens in dem Ventil durch ein von dem magnetisierten Bauelement erzeugtes Magnetfeld. Ein Referenzzeitpunkt (t0) wird erfasst, der repräsentativ ist für einen Beginn eines aktuellen Ansteuerzyklus des Ventils. In dem aktuellen Ansteuerzyklus wird ein Zeitpunkt (t1) abhängig von einem charakteristischen Verlauf der Induktionsspannung ermittelt, der repräsentativ ist für ein Ende eines Bewegungsvorgangs des Ventilkolbens in dem Ventil. Eine aktuelle Schaltzeitdauer (T) wird ermittelt abhängig von dem Zeitpunkt (t1) und dem Referenzzeitpunkt (t0). Mindestens eine Fehlerbedingung wird ermittelt abhängig von der Schaltzeitdauer (T). Ein Fehler wird erkannt, wenn die mindestens eine Fehlerbedingung erfüllt ist.

## Beschreibung

Die Erfindung betrifft ein Verfahren zum Überprüfen eines Ventils, insbesondere eines magnetisch bistabilen Solenoid-Ventils für ein Einspritzventil einer Brennkraftmaschine in einem Kraftfahrzeug.

An Brennkraftmaschinen, insbesondere in Kraftfahrzeugen, werden hohe Anforderungen gestellt. Die Schadstoffemissionen unterliegen gesetzlichen Bestimmungen und der Kunde verlangt nach einem geringen Kraftstoffverbrauch und einem sicheren und zuverlässigen Betrieb. Durch direktes Einspritzen des Kraftstoffs in die jeweilige Verbrennungskammer der Brennkraftmaschine mit hohem Druck, z.B. mit über 2000 Bar bei Dieselkraftstoff oder über 100 Bar bei Benzin, sowie gegebenenfalls durch Zuführen des Kraftstoffs in mehreren Teileinspritzungen je Einspritzvorgang kann die Gemischaufbereitung verbessert werden und so der Kraftstoffverbrauch und die Entstehung von Schadstoffemissionen verringert werden. Die Anforderungen an die Präzision und Dynamik der Einspritzventile sind daher hoch. Gefordert sind beispielsweise Ventilschaltzeiten von z.B. etwa 100 bis 500 Mikrosekunden, so dass bei dem hohen Kraftstoffdruck geringe Kraftstoffmengen, z.B. wenige Mikrogramm, präzise eingespritzt werden können. Für Diesel-Pkw-Motoren weisen die Einspritzventile dazu einen Piezoaktor zum Betätigen des Ventils auf. Jedoch sind Einspritzventile mit Piezoaktor teuer. Einspritzventile, die einen Magnetaktor aufweisen, erreichen jedoch die geforderten Ventilschaltzeiten nicht.

Für großvolumige und langsam laufende Diesel-Lkw-Motoren, beispielsweise ein Sechs-Zylinder-Motor mit neun Litern Hubraum und einer Betriebsdrehzahl von maximal 1.800 Umdrehungen pro Minute, sind die Anforderung an die Ventilschaltzeiten geringer. Um eine vorgegebene Kraftstoffmenge präzise zumessen zu können, müssen eine Zeitdauer, während der das Ventil geöffnet ist, und die Ventilschaltzeit möglichst präzise bekannt sein.

Die Aufgabe der Erfindung ist, ein Verfahren zum Überprüfen eines Ventils zu schaffen, das einfach und zuverlässig ist.

Die Aufgabe wird gelöst durch die Merkmale der unabhängigen Patentansprüche. Vorteilhafte Weiterbildungen der Erfindung sind in den Unteransprüchen gekennzeichnet.

Die Erfindung zeichnet sich aus durch ein Verfahren zum Überprüfen eines Ventils mit einem Ventilkolben, der abhängig von einer Ansteuerung des Ventils bewegbar ist zum Öffnen und Schließen des Ventils. Das Ventil umfasst mindestens eine Spule und mindestens ein magnetisiertes Bauelement. Das Ventil ist so ausgebildet, dass eine Induktionsspannung in der mindestens einen Spule induziert wird durch ein Bewegen des Ventilkolbens in dem Ventil durch ein von dem magnetisierten Bauelement erzeugtes Magnetfeld. Ein Referenzzeitpunkt wird erfasst, der repräsentativ ist für einen Beginn eines aktuellen Ansteuerzyklus des Ventils. In dem aktuellen Ansteuerzyklus wird ein Zeitpunkt abhängig von einem charakteristischen Verlauf der Induktionsspannung ermittelt, der repräsentativ ist für ein Ende eines Bewegungsvorgangs des Ventilkolbens in dem Ventil. Eine aktuelle Schaltzeitdauer wird ermittelt abhängig von dem Zeitpunkt und dem Referenzzeitpunkt. Mindestens eine Fehlerbedingung wird ermittelt abhängig von der Schaltzeitdauer. Ein Fehler wird erkannt, wenn die mindestens eine Fehlerbedingung erfüllt ist.

Der Vorteil ist, dass abhängig von der Schaltzeitdauer der Fehler des Ventils einfach und zuverlässig erkannt werden kann. Insbesondere ist eine mechanische Fehlfunktion des Ventils, z.B. durch hydraulisches Kleben des Ventilkolbens, zuverlässig erkennbar. Ist das Ventil beispielsweise Teil eines Einspritzventils einer Brennkraftmaschine eines Kraftfahrzeugs, dann kann der Fehler des Ventils zu einer erhöhten Schadstoffemission führen. Durch das Erkennen des Fehlers besteht die Möglichkeit, dem Fahrer des Fahrzeugs den Fehler zu signalisieren, so dass der Fehler in einer Werkstatt behoben werden kann.

In einer vorteilhaften Ausgestaltung der Erfindung ist die mindestens eine Fehlerbedingung erfüllt, wenn die Schaltzeitdauer größer ist als ein vorgegebener erster Schwellenwert. Dies hat den Vorteil, dass ein Ausbleiben des Bewegungsvorgangs des Ventilkolbens oder ein verzögerter Bewegungsvorgang sehr einfach als Fehler erkannt werden kann.

In einer weiteren vorteilhaften Ausgestaltung der Erfindung wird ein aktueller gleitender Mittelwert ermittelt abhängig von der aktuellen Schaltzeitdauer und einer vorgegebenen Anzahl der jeweiligen Schaltzeitdauer vorangegangener Ansteuerzyklen. Die mindestens eine Fehlerbedingung ist erfüllt, wenn ein Betrag einer Differenz der aktuellen Schaltzeitdauer und des aktuellen gleitenden Mittelwerts oder eines für einen vorangegangenen Ansteuerzyklus ermittelten gleitenden Mittelwerts größer ist als ein vorgegebener zweiter Schwellenwert. Dies hat den Vorteil, dass Schwankungen der Schaltzeitdauer des Ventils einfach und zuverlässig als Fehler erkannt werden können. Dadurch kann die Wartung oder Instandsetzung des Ventils veranlasst werden, bevor das Ventil ausfällt.

In einer weiteren vorteilhaften Ausgestaltung der Erfindung wird der aktuelle gleitende Mittelwert ermittelt abhängig von der aktuellen Schaltzeitdauer und der vorgegebenen Anzahl der jeweiligen Schaltzeitdauer vorangegangener Ansteuerzyklen. Der aktuelle gleitende Mittelwert wird gespeichert. Abhängig von dem aktuellen gleitenden Mittelwert und mindestens einem bereits zuvor gespeicherten gleitenden Mittelwert wird eine Größe ermittelt, die repräsentativ ist für eine aktuelle Veränderungsrate des gleitenden Mittelwerts. Die mindestens eine Fehlerbedingung ist erfüllt, wenn die Größe größer ist als ein vorgegebener dritter Schwellenwert. Dies hat den Vorteil, dass bereits bevor das Ventil ausfällt erkannt werden kann, dass sich Eigenschaften des Ventils so verändern, dass von einem Ausfall des Ventils in naher Zukunft ausgegangen werden kann. Beispielsweise verlängert sich die Schaltzeitdauer mit zunehmendem Alter des Ventils durch Verschleiß. Die Wartung oder Instandsetzung oder der Austausch des Ventils kann so frühzeitig veranlasst werden.

In einer weiteren vorteilhaften Ausgestaltung der Erfindung wird der Fehler jeweils nur dann erkannt, wenn die mindestens eine Fehlerbedingung innerhalb eines vorgegebenen maximalen Fehlerintervalls für mindestens eine vorgegebene Fehleranzahl erfüllt ist. Der Vorteil ist, dass selten auftretende Ausreißer der Schaltzeitdauer nicht zu einer Fehlermeldung führen. Dadurch werden unnötige Fehlermeldungen und gegebenenfalls Wartungsarbeiten vermieden.

In einer weiteren vorteilhaften Ausgestaltung der Erfindung wird das Verfahren durchgeführt, wenn vorgegebene Betriebsbedingungen des Ventils vorherrschen. Dies hat den Vorteil, dass die ermittelte Schaltzeitdauer oder der gleitende Mittelwert des aktuellen Ansteuerzyklus besonders gut vergleichbar sind mit zuvor ermittelten Schaltzeitdauern beziehungsweise gleitenden Mittelwerten. Das Überprüfen des Ventils ist so besonders zuverlässig.

In einer weiteren vorteilhaften Ausgestaltung der Erfindung werden die Schaltzeitdauer oder der gleitende Mittelwert korrigiert abhängig von aktuell vorherrschenden Betriebsbedingungen des Ventils. Dies hat den Vorteil, dass bei unterschiedlichen Betriebsbedingungen ermittelte Schaltzeitdauern und gleitende Mittelwerte gut miteinander vergleichbar werden und das Überprüfen des Ventils so besonders zuverlässig ist.

Ausführungsbeispiele der Erfindung sind im Folgenden anhand der schematischen Zeichnungen erläutert.

Es zeigen:
- Figur 1: ein Ventil,
- Figur 2: eine Schaltungsanordnung für ein Ansteuern des Ventils,
- Figur 3: ein Stromzeit- und Spannungszeitdiagramm,
- Figur 4: ein Blockschaltbild einer Vorrichtung zum Erkennen eines Endes einer Bewegung eines Ventilkolbens in dem Ventil,
- Figur 5: ein erstes Ablaufdiagramm,
- Figur 6: ein zweites Ablaufdiagramm,
- Figur 7: ein drittes Ablaufdiagramm und
- Figur 8: ein viertes Ablaufdiagramm.

Elemente gleicher Konstruktion oder Funktion sind figuren-übergreifend mit den gleichen Bezugszeichen versehen.

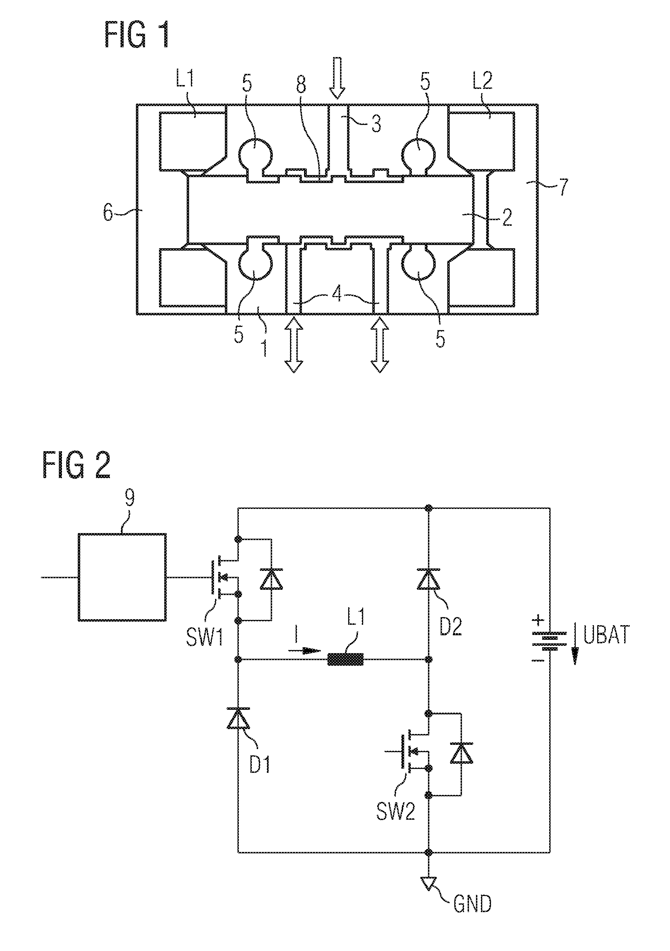

Ein Ventil, z.B. ein Steuerventil für ein Einspritzventil für eine Brennkraftmaschine in einem Kraftfahrzeug, umfasst ein Ventilgehäuse 1, das eine Ausnehmung aufweist, in der ein Ventilkolben 2 axial beweglich angeordnet ist (Figur 1). Das Ventil weist einen Einlass 3 und zwei Auslässe 4 auf, die in dem Ventilgehäuse 1 ausgebildet sind. Ferner sind in dem Ventilgehäuse 1 Abflüsse 5 ausgebildet. Der Einlass 3 ist beispielsweise mit einem nicht dargestellten Fluidreservoir koppelbar, aus dem dem Ventil ein Fluid, z.B. Hydrauliköl oder Motoröl, zugeführt werden kann. Die Auslässe 4 münden beispielsweise in einen nicht dargestellten Steuerraum, an den z.B. ein Hydraulikstempel angrenzt, der abhängig von einem Fluiddruck in dem Steuerraum bewegbar ist zum Öffnen und Schließen des Einspritzventils.

Abhängig von einer axialen Position des Ventilkolbens 2 in der Ausnehmung des Ventilgehäuses 1 ist entweder der Einlass 3 hydraulisch über Nuten 8, die in dem Ventilkolben 2 und dem Ventilgehäuse 1 ausgebildet sind, mit den Auslässen 4 gekoppelt oder sind die Auslässe 4 mit den Abflüssen 5 gekoppelt. Durch die Abflüsse 5 kann das Fluid aus dem Steuerraum abfließen.

Das Ventil weist eine erste Kappe 6 und eine zweite Kappe 7 auf, die jeweils an einem axialen Ende des Ventils angeordnet sind. Die erste Kappe 6 und die zweite Kappe 7 begrenzen den Hub des Ventilkolbens 2 in dem Ventilgehäuse 1. Angrenzend an die erste Kappe 6 ist eine erste Spule L1 und angrenzend an die zweite Kappe 7 ist eine zweite Spule L2 angeordnet. Durch ein geeignetes Bestromen der ersten Spule L1 bzw. der zweiten Spule L2 kann ein Magnetfeld so aufgebaut werden, dass der Ventilkolben 2 durch dieses angezogen wird und gegen die durch die erste Kappe 6 bzw. die zweite Kappe 7 gebildete Hubbegrenzung bewegt wird. Vorzugsweise sind die erste Kappe 6 und die zweite Kappe 7 so ausgebildet, dass auch nach dem Beenden des Bestromens der ersten Spule L1 bzw. der zweiten Spule L2 durch ein entsprechendes Magnetisieren der ersten Kappe 6 bzw. der zweiten Kappe 7 ein Remanenzmagnetfeld erhalten bleibt. Der Ventilkolben 2 kann so seine aktuelle Position an der ersten Kappe 6 bzw. der zweiten Kappe 7 beibehalten, bis der Ventilkolben 2 durch das Bestromen der jeweils gegenüberliegenden Spule zu der dieser zugeordneten Kappe gezogen wird. Das Ventil bildet somit ein magnetisch bistabiles Solenoid-Ventil. Das Ventil kann jedoch auch anders ausgebildet sein.

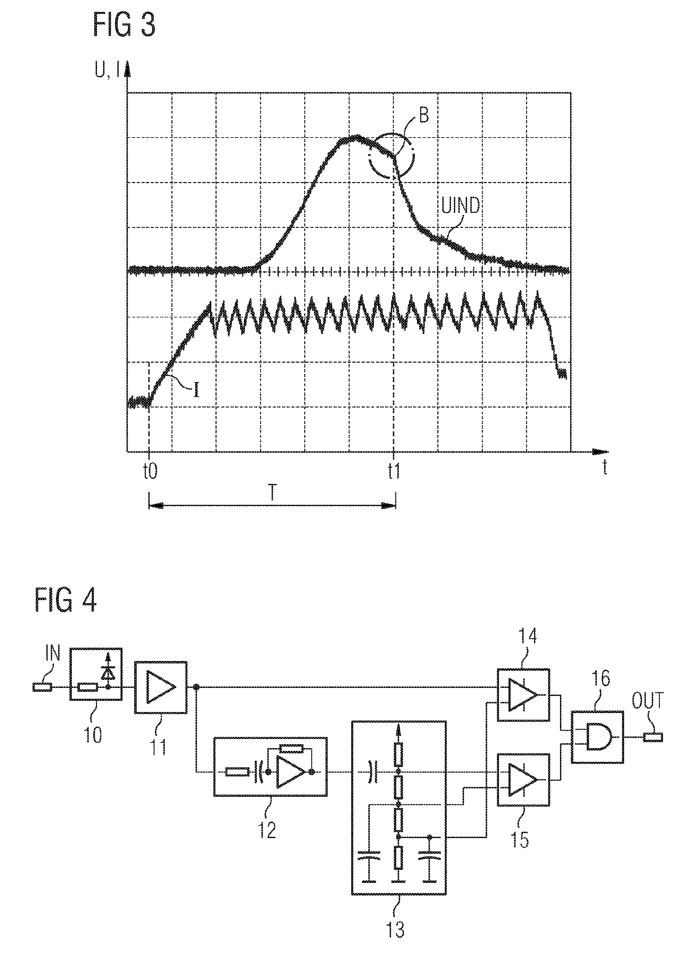

Figur 2 zeigt eine Schaltungsanordnung, die ausgebildet ist zum Ansteuern des Ventils. Die Schaltungsanordnung weist eine Steuereinrichtung 9 auf, die beispielsweise ein pulsweitenmoduliertes Steuersignal erzeugt, das einem ersten Schalter SW1 zugeführt wird. Der erste Schalter SW1 ist elektrisch zwischen einem positiven Potenzial einer Batteriespannung UBAT und einem ersten Anschluss der ersten Spule L1 angeordnet. Die Batteriespannung UBAT beträgt beispielsweise etwa 24 Volt. Ferner ist der erste Schalter SW1 und der erste Anschluss der ersten Spule L1 über eine in Sperrrichtung angeordnete erste Diode D1 mit einem negativen Potenzial der Batteriespannung UBAT gekoppelt, das als ein Massepotenzial GND bezeichnet ist.

Ein zweiter Anschluss der ersten Spule L1 ist über einen zweiten Schalter SW2 mit dem Massepotenzial GND gekoppelt. Der zweite Schalter SW2 ist vorgesehen für ein Auswählen des Ventils, wenn weitere Ventile durch die Steuereinrichtung 9 angesteuert werden. Ferner ist der zweite Anschluss der ersten Spule L1 über eine in Sperrrichtung geschaltete zweite Diode D2 mit dem positiven Potenzial der Batteriespannung UBAT gekoppelt. Der erste Schalter SW1, der zweite Schalter SW2, die erste Diode D1 und die zweite Diode D2 sind entsprechend für die zweite Spule L2 vorgesehen. Die Steuereinrichtung 9 ist vorzugsweise ausgebildet, das pulsweitenmodulierte Steuersignal entsprechend auch für die zweite Spule L2 zu erzeugen.

Die erste Spule L1 und die zweite Spule L2 werden vorzugsweise so abwechselnd bestromt, dass der Ventilkolben 2 in die jeweils andere axiale Position an der ersten Kappe 6 bzw. der zweiten Kappe 7 bewegt wird. Vorzugsweise wird die jeweils unbestromte Spule genutzt, um die Bewegung des Ventilkolbens 2 in dem Ventilgehäuse 1 zu erfassen. Dadurch, dass die erste Kappe 6 und die zweite Kappe 7 oder auch das Ventilgehäuse 1 oder der Ventilkolben 2 magnetisiert sind, kann durch das Bewegen des Ventilkolbens 2 durch das vorherrschende Magnetfeld eine Induktionsspannung UIND in der ersten Spule L1 und in der zweiten Spule L2 induziert werden (Figur 3). Diese Induktionsspannung UIND ist in der jeweils unbestromten Spule besonders einfach erfassbar.

Figur 3 zeigt ein Diagramm, in dem ein Verlauf eines elektrischen Stroms I durch die erste Spule L1 bzw. die zweite Spule L2 bei dem Bestromen dargestellt ist. Das Bestromen der jeweiligen Spule beginnt zu einem Referenzzeitpunkt t0 durch das Einschalten des der jeweiligen Spule zugeordneten ersten Schalters SW1 und zweiten Schalters SW2. Der Referenzzeitpunkt t0 ist repräsentativ für einen Beginn eines aktuellen Ansteuerzyklus des Ventils. Der elektrische Strom I steigt an, bis ein vorgegebener Strom erreicht ist. Dann wird der Strom I durch abwechselndes Ein- und Ausschalten des ersten Schalters SW1 in einem vorgegebenen Bereich gehalten. Mit einem Beginn der Bewegung des Ventilkolbens 2 durch das vorherrschende Magnetfeld wird in der jeweils unbestromten Spule die Induktionsspannung UIND induziert. Schlägt der Ventilkolben 2 zu einem Zeitpunkt t1 gegen die durch die erste Kappe 6 bzw. die zweite Kappe 7 gebildete Hubbegrenzung, dann zeigt die Induktionsspannung UIND einen charakteristischen Verlauf in Form eines Knicks B. Der Knick B wird verursacht durch das Ende der Bewegung des Ventilkolbens 2. Da die Induktionsspannung UIND nach dem Zeitpunkt t1 nicht weiter induziert wird, fällt diese nach dem Zeitpunkt t1 schneller als vor dem ersten Zeitpunkt t1. Das Ende der Bewegung des Ventilkolbens 2 kann somit durch das Erkennen des Knicks B in dem Verlauf der Induktionsspannung UIND erkannt werden. Der Zeitpunkt t1 ist repräsentativ für das Ende des Bewegungsvorgangs des Ventilkolbens 2 in dem Ventil. Der aktuelle Ansteuerzyklus wird beendet durch Beenden des Bestromens der ersten Spule L1 bzw. der zweiten Spule L2.

Figur 4 zeigt ein Blockschaltbild einer Vorrichtung zum Erkennen des Endes der Bewegung des Ventilkolbens 2 in dem Ventil. Die Vorrichtung weist einen Eingang IN auf, über den der Vorrichtung die Induktionsspannung UIND zuführbar ist. Eine Schutzschaltung 10 ist eingangsseitig der Vorrichtung vorgesehen, um die Vorrichtung vor einer zu großen Eingangsspannung an dem Eingang IN zu schützen und so ein Beschädigen der Vorrichtung zu verhindern. Die Schutzschaltung 10 ist gekoppelt mit einem Puffer 11. Ausgangsseitig des Puffers 11 kann die Induktionsspannung UIND abgegriffen werden.

Der Puffer 11 ist mit einem Differenzierer 12 gekoppelt, der eine erste Ableitung der Induktionsspannung UIND nach der Zeit bildet und diese ausgangsseitig bereitstellt. Ferner ist in der Vorrichtung ein Referenzerzeuger 13 vorgesehen, der einen vorgegebenen Induktionsspannungsschwellenwert und einen vorgegebenen Ableitungsschwellenwert erzeugt und vorgibt.

Ein erster Vergleicher 14 ist vorgesehen zum Vergleichen der Induktionsspannung UIND mit dem vorgegebenen Induktionsspannungsschwellenwert. Ein zweiter Vergleicher 15 ist vorgesehen zum Vergleichen der ersten Ableitung der Induktionsspannung UIND mit dem vorgegebenen Ableitungsschwellenwert. Ausgangsseitig sind der erste Vergleicher 14 und der zweite Vergleicher 15 über ein Und-Glied 16 logisch miteinander verknüpft. Ein Ausgang OUT der Vorrichtung ist gebildet durch einen Ausgang des Und-Glieds 16. An dem Ausgang OUT wird das Erkennen des Endes der Bewegung des Ventilkolbens 2 signalisiert, wenn die Induktionsspannung UIND größer ist als der vorgegebene Induktionsspannungsschwellenwert und die erste Ableitung der Induktionsspannung UIND unter den vorgegebenen Ableitungsschwellenwert fällt.

Das Signal an dem Ausgang OUT, z.B. ein Ausgangspuls zu oder kurz nach dem Zeitpunkt t1, kann beispielsweise der Steuereinrichtung 9 zugeführt werden, die ausgebildet ist, das Ventil so anzusteuern, dass z.B. eine vorgegebene Kraftstoffmenge eingespritzt wird. Es kann jedoch ebenso ein dem Blockschaltbild entsprechendes Verfahren vorgesehen sein, z.B. in Form eines Programms, das durch die Steuereinrichtung 9 ausgeführt wird. Der Knick B in dem Verlauf der Induktionsspannung UIND kann jedoch auch durch eine anders ausgebildete Vorrichtung oder durch ein anderes Verfahren erkannt werden.

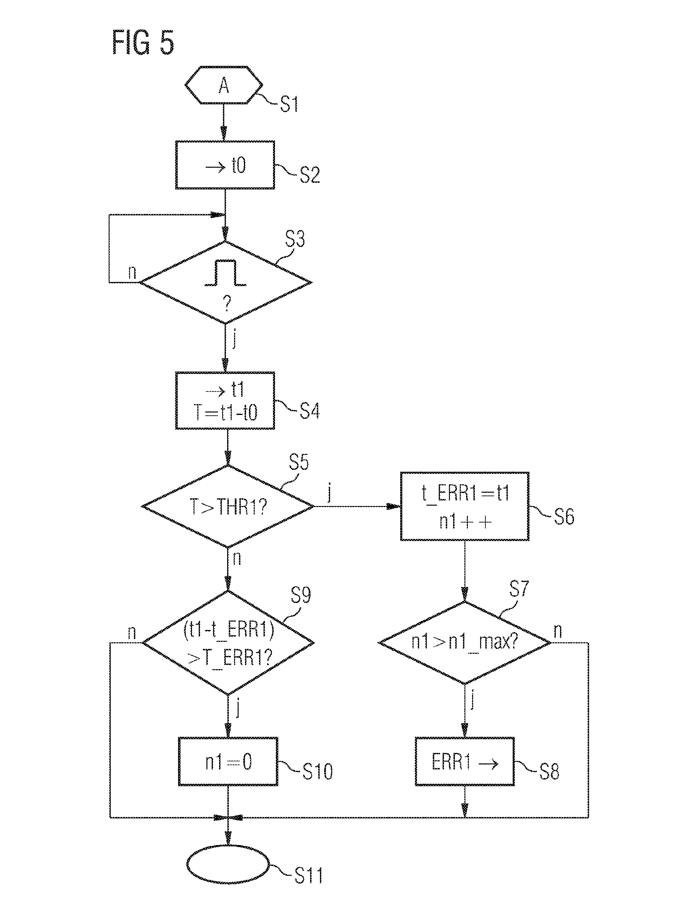

Figur 5 zeigt ein erstes Ablaufdiagramm eines ersten Verfahrens zum Überprüfen des Ventils. Das erste Verfahren beginnt in einem Schritt S1. Der Schritt S1 wird vorzugsweise ausgeführt zu Beginn des aktuellen Ansteuerzyklus. In einem Schritt S2 wird der Referenzzeitpunkt t0 erfasst. In einem Schritt S3 wird überprüft, ob der Knick B in dem Verlauf der Induktionsspannung UIND aufgetreten ist. Beispielsweise wird in dem Schritt S3 überprüft, ob an dem Ausgang OUT der in Figur 4 dargestellten Vorrichtung der Ausgangspuls, d.h. das Signal für das Erkennen des Endes der Bewegung des Ventilkolbens 2 in dem Ventil, aufgetreten ist. Der Schritt S3 wird solange wiederholt, bis das Ende der Bewegung des Ventilkolbens 2 erkannt wurde oder das Wiederholen abgebrochen wird aufgrund des Überschreitens einer vorgegebenen maximalen Zeitdauer seit dem Beginn des aktuellen Ansteuerzyklus.

In einem Schritt S4 wird der Zeitpunkt t1 erfasst. Ferner wird eine aktuelle Schaltzeitdauer T abhängig von dem Zeitpunkt t1 und dem Referenzzeitpunkt t0 ermittelt, z.B. als eine Differenz des Zeitpunkts t1 und des Referenzzeitpunkts t0. In einem Schritt S5 wird überprüft, ob eine erste Fehlerbedingung erfüllt ist. Die erste Fehlerbedingung ist erfüllt, wenn die Schaltzeitdauer T größer ist als ein vorgegebener erster Schwellenwert THR1. Ist die erste Fehlerbedingung erfüllt, dann wird in einem Schritt S6 der Zeitpunkt t1 als ein erster Fehlerzeitpunkt t_ERR1 gespeichert und eine erste Fehleranzahl n1 erhöht, z.B. um Eins. In einem Schritt S7 wird überprüft, ob die erste Fehleranzahl n1 größer ist als eine vorgegebene erste maximale Fehleranzahl n1_max. Ist diese Bedingung erfüllt, dann wird in einem Schritt S8 ein erster Fehler ERR1 des Ventils erkannt und das erste Verfahren in einem Schritt S11 beendet. Ist die Bedingung in dem Schritt S7 nicht erfüllt, dann wird das erste Verfahren ebenfalls in dem Schritt S11 beendet.

Ist die erste Fehlerbedingung in dem Schritt S5 nicht erfüllt, ist also die aktuelle Schaltzeitdauer T kleiner oder gleich dem vorgegebenen ersten Schwellenwert THR1, dann wird in einem Schritt S9 überprüft, ob eine Differenz des Zeitpunkts t1 und des ersten Fehlerzeitpunkts t_ERR1 größer ist als ein vorgegebenes erstes maximales Fehlerintervall T_ERR1. Das vorgegebene erste maximale Fehlerintervall T_ERR1 ist eine Zeitdauer, in der die erste Fehlerbedingung in dem Schritt S5 für mindestens die vorgegebene erste maximale Fehleranzahl n1_max erfüllt sein muss, um den Fehler des Ventils zu erkennen. Deshalb wird in einem Schritt S10 die erste Fehleranzahl n1 auf einen neutralen Wert gesetzt, z.B. auf Null, wenn die Differenz des Zeitpunkts t1 und des ersten Fehlerzeitpunkts t_ERR1 größer ist als das vorgegebene erste maximale Fehlerintervall T_ERR1. Das erste Verfahren wird nach dem Schritt S10 in dem Schritt S11 beendet. Das erste Verfahren wird ebenfalls in dem Schritt S11 beendet, wenn die Bedingung in dem Schritt S9 nicht erfüllt ist.

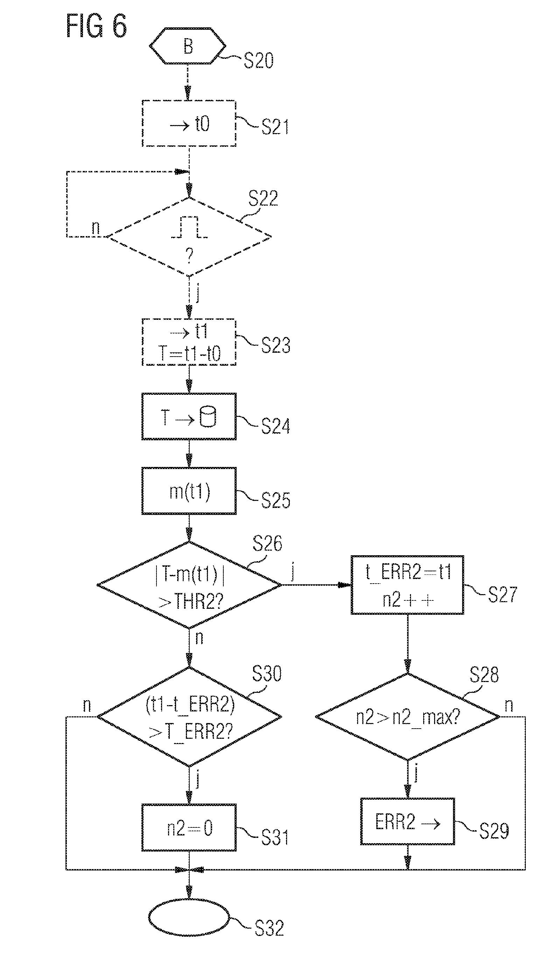

Figur 6 zeigt ein zweites Ablaufdiagramm eines zweiten Verfahrens zum Überprüfen des Ventils. Das zweite Verfahren beginnt in einem Schritt S20, das entsprechend dem Schritt S1 zu Beginn des aktuellen Ansteuerzyklus ausgeführt wird. Entsprechend dem Schritt S2 wird in dem Schritt S21 der Referenzzeitpunkt t0 erfasst. In einem Schritt S22 wird entsprechend dem Schritt S3 das Ende der Bewegung des Ventilkolbens in dem Ventil erkannt. In einem Schritt S23 wird entsprechend dem Schritt S4 der Zeitpunkt t1 und die Schaltzeitdauer T ermittelt. In einem Schritt S24 wird die Schaltzeitdauer T gespeichert. In einem Schritt S25 wird ein aktueller gleitender Mittelwert m ermittelt abhängig von der aktuellen Schaltzeitdauer T und einer vorgegebenen Anzahl der jeweils gespeicherten Schaltzeitdauer vorangegangener Ansteuerzyklen. Beispielsweise werden etwa zehn oder zwanzig vorangegangene Ansteuerzyklen für das Ermitteln des aktuellen gleitenden Mittelwerts m berücksichtigt.

In einem Schritt S26 wird überprüft, ob eine zweite Fehlerbedingung erfüllt ist. Die zweite Fehlerbedingung in dem Schritt S26 ist erfüllt, wenn ein Betrag einer Differenz der aktuellen Schaltzeitdauer T und entweder des aktuellen gleitenden Mittelwerts m, der also die aktuelle Schaltzeitdauer T umfasst, oder eines für einen vorangegangenen Ansteuerzyklus ermittelten gleitenden Mittelwerts, der die aktuelle Schaltzeitdauer T nicht umfasst, größer ist als ein vorgegebener zweiter Schwellenwert THR2. Ist die zweite Fehlerbedingung erfüllt, dann wird in einem Schritt S27 der Zeitpunkt t1 als ein zweiter Fehlerzeitpunkt t_ERR2 gespeichert und eine zweite Fehleranzahl n2 erhöht, z.B. um Eins. In einem Schritt S28 wird überprüft, ob die zweite Fehleranzahl n2 größer ist als eine vorgegebene zweite maximale Fehleranzahl n2_max. Ist diese Bedingung erfüllt, dann wird in einem Schritt S29 ein zweiter Fehler ERR2 erkannt und das zweite Verfahren in einem Schritt S32 beendet. Das zweite Verfahren wird ebenfalls in dem Schritt S32 beendet, wenn die Bedingung in dem Schritt S28 nicht erfüllt ist.

Ist die zweite Fehlerbedingung in dem Schritt S26 nicht erfüllt, d.h. der Betrag der Differenz der aktuellen Schaltzeitdauer T und entweder des aktuellen gleitenden Mittelwerts m oder des für den vorangegangenen Ansteuerzyklus ermittelten gleitenden Mittelwerts ist kleiner oder gleich als der vorgegebene zweite Schwellenwert THR2, dann wird in einem Schritt S30 überprüft, ob eine Differenz des Zeitpunkts t1 und des zweiten Fehlerzeitpunkts t_ERR2 größer ist als ein vorgegebenes zweites maximales Fehlerintervall T_ERR2. Ist diese Bedingung erfüllt, dann wird in einem Schritt S31 die zweite Fehleranzahl n2 auf einen neutralen Wert gesetzt, z.B. auf Null. Das zweite Verfahren wird in dem Schritt S32 beendet. Das zweite Verfahren wird ebenfalls in dem Schritt S32 beendet, wenn die Bedingung in dem Schritt S30 nicht erfüllt ist.

Der zweite Fehler ERR2 repräsentiert ein Schwanken der Schaltzeitdauer T. Die schwankende Schaltzeitdauer T kann zu entsprechenden Schwankungen der zugemessenen Fluidmenge führen. Bei der Brennkraftmaschine können dadurch Schadstoffemissionen erhöht werden.

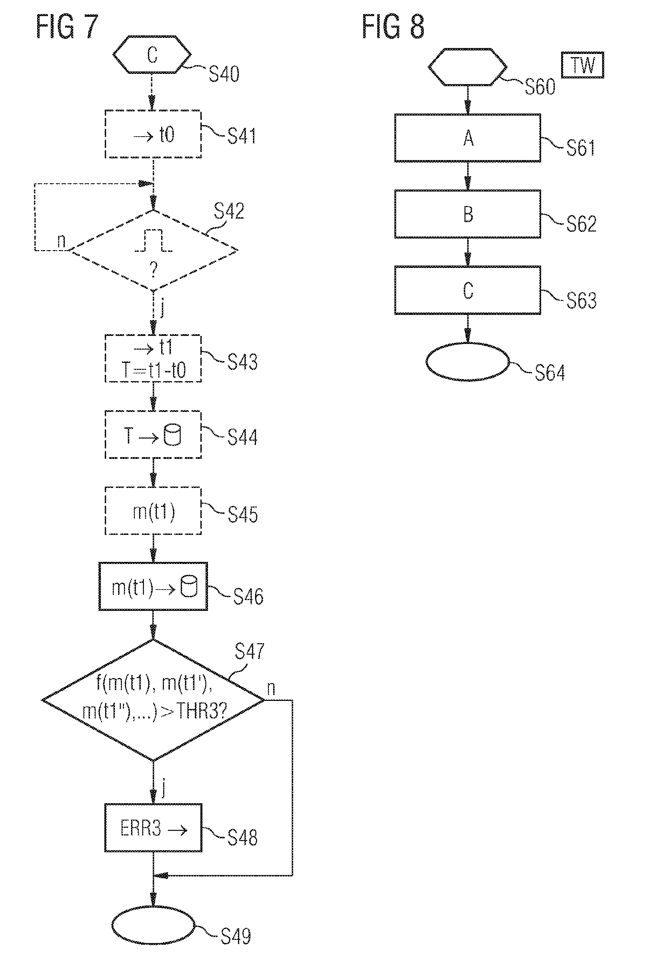

Figur 7 zeigt ein drittes Ablaufdiagramm eines dritten Verfahrens zum Überprüfen des Ventils. Das dritte Verfahren beginnt in einem Schritt S40 der entsprechend dem Schritt S1 oder dem Schritt S20 ausgeführt wird. Der Schritt S40 wird jedoch vorzugsweise seltener ausgeführt als der Schritt S1 oder der Schritt S20, z.B. nur ein Mal in jeder Betriebsstunde des Ventils oder ein Mal je Betrieb des Ventils, z.B. jeweils bei Betriebsbeginn des Ventils. In einem Schritt S41 wird entsprechend dem Schritt S21 der Referenzzeitpunkt t0 erfasst. In einem Schritt S42 wird entsprechend dem Schritt S22 das Ende der Bewegung des Ventilkolbens 2 in dem Ventil erfasst. In einem Schritt S43 wird entsprechend dem Schritt S23 der Zeitpunkt t1 und die Schaltzeitdauer T ermittelt. In einem Schritt S44 wird entsprechend dem Schritt S24 die Schaltzeitdauer T gespeichert und in einem Schritt S45 wird entsprechend dem Schritt S25 der aktuelle gleitende Mittelwert m ermittelt.

In einem Schritt S46 wird der aktuelle gleitende Mittelwert m gespeichert. In einem Schritt S47 wird überprüft, ob eine dritte Fehlerbedingung erfüllt ist. Die dritte Fehlerbedingung ist erfüllt, wenn eine Größe, die repräsentativ ist für eine aktuelle Veränderungsrate des gleitenden Mittelwerts, größer ist als ein vorgegebener dritter Schwellenwert THR3. Die Größe wird ermittelt abhängig von dem aktuellen gleitenden Mittelwert m und mindestens einem bereits zuvor gespeicherten gleitenden Mittelwert. Die für das Ermitteln der Größe berücksichtigten Mittelwerte sind vorzugsweise Stichproben des jeweils aktuellen gleitenden Mittelwerts m, die über größere Zeiträume, z.B. Monate oder Jahre oder abhängig von der Betriebszeitdauer des Ventils gespeichert werden. Das dritte Verfahren nutzt die Erkenntnis, dass die Schaltzeitdauer des Ventils sich bedingt durch Verschleiß langsam verändert, sich die Veränderung jedoch beschleunigt, wenn der Ausfall des Ventils kurz bevorsteht. Ist die dritte Fehlerbedingung in dem Schritt S47 erfüllt, dann wird in einem Schritt S48 ein dritter Fehler ERR3 erkannt und das dritte Verfahren in einem Schritt S49 beendet. Das dritte Verfahren wird ebenfalls in dem Schritt S49 beendet, wenn die Bedingung in dem Schritt S47 nicht erfüllt ist.

Entsprechend dem ersten Verfahren und dem zweiten Verfahren kann auch das dritte Verfahren so erweitert werden, dass der dritte Fehler ERR3 nur dann erkannt wird, wenn die dritte Fehlerbedingung innerhalb eines weiteren vorgegebenen maximalen Fehlerintervalls für mindestens eine weitere vorgegebene Fehleranzahl erfüllt ist.

Figur 8 zeigt ein viertes Ablaufdiagramm eines vierten Verfahrens zum Überprüfen des Ventils. Das vierte Verfahren umfasst das erste, zweite und dritte Verfahren. Das Verfahren beginnt in einem Schritt S60. In einem Schritt S61 wird das erste Verfahren ausgeführt. In einem Schritt S62 wird das zweite Verfahren ausgeführt und in einem Schritt S63 wird das dritte Verfahren ausgeführt. Das vierte Verfahren wird in einem Schritt S64 beendet und gegebenenfalls nach einer Wartezeitdauer TW in dem Schritt S60 fortgeführt.

Die Schritte S2, S3 und S4 werden vorzugsweise für das erste, zweite und dritte Verfahren gemeinsam ausgeführt, so dass die Schritte S21, S22 und S23 sowie die Schritte S41, S42 und S43 nicht erneut ausgeführt werden müssen. Entsprechend müssen die Schritte S44 und S45 nicht erneut ausgeführt werden, wenn bereits die Schritte S24 und S25 ausgeführt wurden.

Das erste, zweite und dritte Verfahren ist jeweils unabhängig von den jeweils anderen beiden Verfahren ausführbar. Ebenso können diese Verfahren in beliebiger Kombinationen ausgeführt werden. Dabei kann die Reihenfolge der Ausführung beliebig gewählt werden.

Bevorzugt werden das erste, das zweite, das dritte oder das vierte Verfahren ausgeführt, wenn vorgegebene Betriebsbedingungen des Ventils vorherrschen, z.B. bei einer vorgegebenen Temperatur. Dadurch sind in verschiedenen Ansteuerzyklen ermittelte Schaltzeitdauern oder gleitende Mittelwerte besonders gut miteinander vergleichbar. Alternativ wird die aktuelle Schaltzeitdauer T oder der aktuelle gleitende Mittelwert m korrigiert abhängig von aktuell vorherrschenden Betriebsbedingungen des Ventils. Diese Korrektur kann beispielsweise bezogen auf eine Referenztemperatur erfolgen.

## Patentansprüche

1. Verfahren zum Überprüfen eines Ventils mit einem Ventilkolben, der abhängig von einer Ansteuerung des Ventils bewegbar ist zum Öffnen und Schließen des Ventils, und das Ventil mindestens eine Spule und mindestens ein magnetisiertes Bauelement umfasst und das Ventil so ausgebildet ist, dass eine Induktionsspannung in der mindestens einen Spule induziert wird durch ein Bewegen des Ventilkolbens in dem Ventil durch ein von dem magnetisierten Bauelement erzeugtes Magnetfeld, bei dem
- ein Referenzzeitpunkt (t0) erfasst wird, der repräsentativ ist für einen Beginn eines aktuellen Ansteuerzyklus des Ventils,
- in dem aktuellen Ansteuerzyklus ein Zeitpunkt (t1) abhängig von einem charakteristischen Verlauf der Induktionsspannung ermittelt wird, der repräsentativ ist für ein Ende eines Bewegungsvorgangs des Ventilkolbens in dem Ventil,
- eine aktuelle Schaltzeitdauer (T) ermittelt wird abhängig von dem Zeitpunkt (t1) und dem Referenzzeitpunkt (t0),
- mindestens eine Fehlerbedingung ermittelt wird abhängig von der Schaltzeitdauer (T) und
- ein Fehler erkannt wird, wenn die mindestens eine Fehlerbedingung erfüllt ist.

2. Verfahren nach Anspruch 1, bei dem
- die mindestens eine Fehlerbedingung erfüllt ist, wenn die Schaltzeitdauer (T) größer ist als ein vorgegebener erster Schwellenwert (THR1).

3. Verfahren nach einem der vorstehenden Ansprüche, bei dem
- ein aktueller gleitender Mittelwert (m) ermittelt wird abhängig von der aktuellen Schaltzeitdauer (T) und einer vorgegebenen Anzahl der jeweiligen Schaltzeitdauer vorangegangener Ansteuerzyklen,
- die mindestens eine Fehlerbedingung erfüllt ist, wenn ein Betrag einer Differenz der aktuellen Schaltzeitdauer (T) und des aktuellen gleitenden Mittelwerts (m) oder eines für einen vorangegangenen Ansteuerzyklus ermittelten gleitenden Mittelwerts größer ist als ein vorgegebener zweiter Schwellenwert (THR2).

4. Verfahren nach einem der vorstehenden Ansprüche, bei dem
- der aktuelle gleitende Mittelwert (m) ermittelt wird abhängig von der aktuellen Schaltzeitdauer (T) und der vorgegebenen Anzahl der jeweiligen Schaltzeitdauer vorangegangener Ansteuerzyklen,
- der aktuelle gleitende Mittelwert (m) gespeichert wird,
- abhängig von dem aktuellen gleitenden Mittelwert (m) und mindestens einem bereits zuvor gespeicherten gleitenden Mittelwert eine Größe ermittelt wird, die repräsentativ ist für eine aktuelle Veränderungsrate des gleitenden Mittelwerts,
- die mindestens eine Fehlerbedingung erfüllt ist, wenn die Größe größer ist als ein vorgegebener dritter Schwellenwert (THR3) .

5. Verfahren nach einem der vorstehenden Ansprüche, bei dem der Fehler jeweils nur dann erkannt wird, wenn die mindestens eine Fehlerbedingung innerhalb eines vorgegebenen maximalen Fehlerintervalls für mindestens eine vorgegebene Fehleranzahl erfüllt ist.

6. Verfahren nach einem der vorstehenden Ansprüche, bei dem das Verfahren durchgeführt wird, wenn vorgegebene Betriebsbedingungen des Ventils vorherrschen.

7. Verfahren nach einem der Ansprüche 1 bis 5, bei dem die Schaltzeitdauer (T) oder der gleitende Mittelwert (m) korrigiert werden abhängig von aktuell vorherrschenden Betriebsbedingungen des Ventils.
